# EUROPEAN PATENT SPECIFICATION

(11) **EP 3 103 663 B1**
(45) Date of publication and mention of the grant of the patent: **04.03.2020**
(21) Application number: 15382307.5
(22) Date of filing: 12.06.2015
(51) Int. Cl.: B60H 1/00

(54) **HEATING VENTILATION AND AIR CONDITIONING UNIT FOR CONDITIONING AN AIR FLOW, WITH AT LEAST ONE AIR TREATMENT DEVICE AND A HOUSING FOR SUCH AN HEATING UNIT**
HEIZUNGS-, LÜFTUNGS- UND KLIMAANLAGE ZUR KLIMATISIERUNG EINES LUFTSTROMS MIT MINDESTENS EINER LUFTAUFBEREITUNGSVORRICHTUNG UND GEHÄUSE FÜR EINE SOLCHE HEIZUNGSANLAGE
UNITE DE VENTILATION DE CHAUFFAGE ET DE CONDITIONNEMENT D'AIR POUR CONDITIONNER UN ECOULEMENT D'AIR, AVEC AU MOINS UN DISPOSITIF DE TRAITEMENT D'AIR ET UN BOITIER POUR UNE TELLE UNITE DE CHAUFFAGE

(43) Date of publication of application: 14.12.2016
(73) Proprietor: VALEO CLIMATIZACION S.A., 08107 Martorelles (ES)
(72) Inventor: PUIG, Anna, 08018 Barcelona (ES); PELISSOU, Olivier, 08100 Mollet del Valles (ES); REBOLLAR, Jorge, 08037 Barcelona (ES)
(74) Representative: Ponti & Partners, S.L.P

(56) References cited:
- EP-A2- 2 039 542
- DE-A1-102007 044 977
- US-B1- 6 782 708

## Description

### Technical Field

The present invention relates to a Heating Ventilation and Air Conditioning (HVAC) unit for conditioning an air flow, with at least one air treatment device, and a housing for such an HVAC unit.

### Background of the Invention

In the automotive industry, it is known to provide a Heating Ventilation and air Conditioning (HVAC) unit for treating the air flow circulating inside the vehicle cabin to improve the comfort of the occupants of the vehicle.

An HVAC unit comprises a plurality of air treatment devices, such as an air filter, for removing at least some particles from the incoming air flow. The HVAC unit further comprises an air treatment device such as a blower fan to generate an air flow through the HVAC unit. The HVAC unit also comprises treatment devices for heating and cooling the air, including, among others, an evaporator and a heater core.

The HVAC unit is normally installed in the instrument panel of a vehicle and is adapted to receive an external air flow from outside of the vehicle cabin and generate a conditioned air flow within the vehicle cabin in accordance with specific comfort requirements.

The HVAC unit comprises an HVAC housing which receives the air treatment devices of the HVAC unit in its interior. Some air treatment devices of the HVAC unit may require regular servicing, such as the air filter which needs to changed or cleaned after a determined time interval. The air filter is typically changed once every 30,000 kilometres. The other air treatment devices generally only require servicing if an operating failure is detected.

In practice, the servicing of an air treatment device of an HVAC unit is often difficult to perform. Some air treatment devices are relatively voluminous and may thus be difficult to remove from the HVAC unit in the instrument panel of a vehicle for servicing.

Furthermore, the specific position of the HVAC unit in the vehicle also has an impact on the accessibility of the various air treatment devices inside of an HVAC unit. The HVAC unit is typically installed in the instrument panel of a vehicle, between the two front seats. In a left-hand drive configuration, a determined space is available at the right hand side or passenger side of the HVAC unit. However, on the left side, the presence of the pedals hinders access to the HVAC unit. Thus, it may be difficult to access an air treatment device located on the left side of the HVAC unit in a left-hand drive configuration.

A further problem arises from the fact that it is not possible to predict which air treatment device will require servicing during the life cycle of an HVAC unit. This implies that specific components may have to be added to improve accessibility of all the air treatment devices. However, such a solution is not cost effective.

In view of the above observations, there is an evident need for an improved HVAC unit design to allow a better accessibility of the air treatment devices without generating additional HVAC unit production costs.

Patent document EP2039542A2 discloses a HVAC unit according to the preamble of claim 1.

### Summary of the Invention

In one aspect, the present disclosure is directed to a Heating Ventilation and Air Conditioning (HVAC) unit for conditioning a flow of air, with at least one air treatment device and a housing for receiving said at least one air treatment device, the housing having a housing wall with a defined removable wall part located between a first and a second determined score line, the first and second determined score line providing a guide for cutting the housing wall to allow removal of the removable wall part, wherein the at least one air treatment device and the removable wall part are mutually positioned to allow access to the at least one air treatment device from the exterior of the HVAC unit after removal of the removable wall part.

The HVAC unit is characterized in that it comprises a blower unit surrounded by a scroll wall and a heater core surrounded by a wall element, said at least one treatment device being the heater core, and said removable wall part being a part of the scroll wall.

According to an embodiment of the invention, it is possible that the at least one air treatment device and the removable wall part are mutually positioned to allow removal of the at least one air treatment device from the HVAC unit after removal of the removable wall part.

According to an embodiment of the invention, it is possible that the first and the second determined score line comprise opposing walls forming a groove for guiding a cutting device during the cutting of the housing wall,

According to an embodiment of the invention, it is possible that the first and the second determined score line comprise an exterior section adapted to remain fixed to the housing wall after removal of the removable wall part and an opposing inner section adapted to remain part of the removable wall part.

According to an embodiment of the invention, it is possible that the exterior section of the first and the second determined score line comprise an edge to accommodate a seal member of a replacement part that is adapted to be fixed between the exterior section of the first and the second determined score line.

According to an embodiment of the invention, it is possible that the exterior section of the first and the second determined score line comprise a seat for fixing a fixing means of a replacement part adapted to be fixed between the exterior section of the first and the second determined score line.

In a further aspect, the present disclosure is directed to a housing according to claim 7 for an HVAC unit for receiving at least one air treatment device, the housing comprising a housing wall with a defined removable wall part located between a first and a second determined score line, the first and the second determined score line providing a guide for cutting the housing wall to allow removal of the removable wall part.

### Brief Description of the Drawings

Reference will now be made, by way of example, to the accompanying drawings in which:
- Figure 1 shows a part of an HVAC unit comprising a housing and a blower unit inside the housing according to the present invention,
- Figure 2 shows a part of the HVAC unit according to Figure 1, without the blower unit,
- Figure 3 shows, in detail, the HVAC unit according to Figure 2, with a removable wall part,
- Figure 4 shows a detail of the top portion of a first score line,
- Figure 5 shows a detail of the bottom portion of the first score line,
- Figure 6 shows a part of the HVAC unit without the removable part of the scroll wall,
- Figure 7 shows a part of the HVAC unit with the heater core shifted out of the housing,
- Figure 8 shows a replacement part, adapted to complete and close the scroll wall,
- Figure 9 shows a part of the HVAC unit and the scroll wall after the assembly of the replacement part, and
- Figure 10 shows a part of the HVAC unit with the blower unit being fixed in the scroll wall comprising the replacement part.

In the present text, reference is made to an HVAC unit and the use of such an HVAC unit in a vehicle. For the purpose of clarity, reference is made to vehicle parts and the relative position of those vehicle parts with respect to the HVAC unit. In the present text, specific reference is made to a configuration adapted for driving on the right-hand side of the road, with the steering wheel on the left-hand side of the vehicle. The solution, according to the present invention, as disclosed herein, can be used with the same advantages in a vehicle with the steering wheel on the right-hand side. For a right-hand drive configuration, the words "left" and "right" as used in the text below should be inversed to apply the solution according to the present invention.

It should be noted that the invention, in general, relates to preparing a wall part of the HVAC housing in order to facilitate the removal of said wall part which interferes either with the access to a part such as an air treatment device that needs to be serviced and/or which hinders the removal of said part to be serviced.

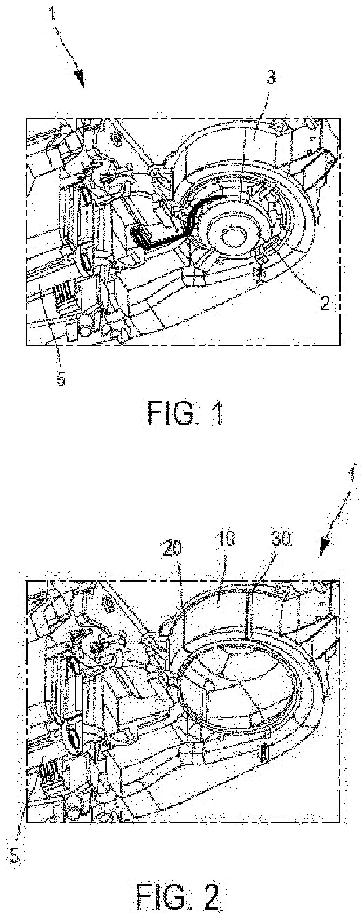

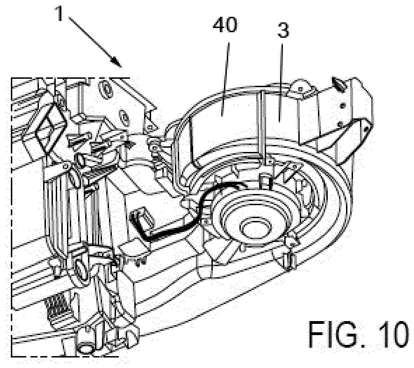

Figures 1 to 10 show a possible use of the invention and refer to an example wherein the invention is used to prepare the scroll wall to allow the removal of part of the scroll wall to thereby allow the removal of a heater core from an HVAC unit.

The person skilled in the art will understand that the invention may be used for any part of the wall of the HVAC housing, including the scroll wall, the duct, the cold/ warm or distribution block and the air inlet area.

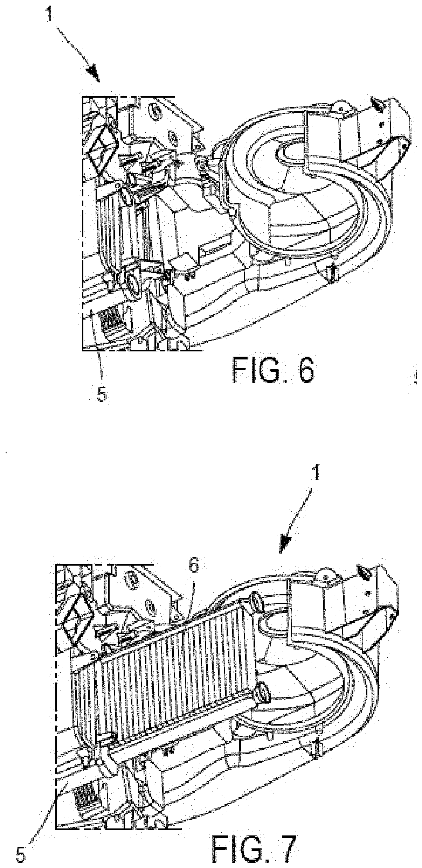

Figure 1 partially shows an HVAC unit 1 which comprises a housing made of a scroll wall 3 and a main wall 5. The HVAC unit 1 comprises a blower unit 2 surrounded by the scroll wall 3 and a heater core 6, (not visible in Figure 1; shown in Figure 7) surrounded by the wall element 5.

Should the heater core 6 need to be serviced, said heater core 6 must be removed from the wall element 5. Due to the presence of the scroll wall 3, the heater core cannot be removed from the right-hand side. For this reason, in HVAC units according to the prior art, the heater core is normally removed from the left-hand side. The left-hand side has limited space available because of the presence, of for instance, the pedals.

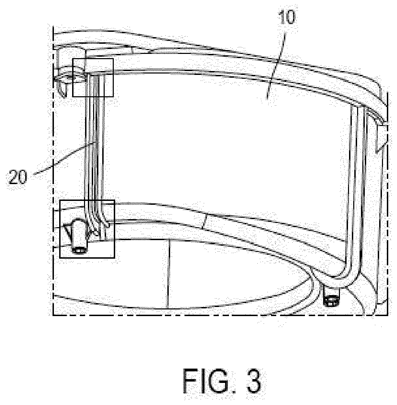

The scroll wall 3 is provided with a wall member 10 delimited by a first 20 and a second 30 determined score line. The first determined score line 20 is shown in detail in Figures 3, 4 and 5. The second determined score line 30 is similar to the first determined score line 20 and operates in a similarly manner to the first determined score line 20.

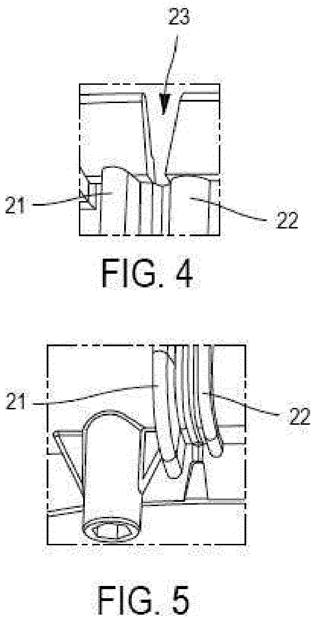

As shown in Figure 4, the first determined score line 20 comprises opposite wall members 21, 22 which together delimit a groove 23. The combination of the opposite wall members 21, 22 and the groove 23 operate as guiding means for a cutting element, such as a utility knife or knife, from the top part of the groove 23 shown in Figure 4 to the bottom part of the groove 23 shown in Figure 5. In a similar manner, the second determined score line 30 comprises opposite wall members (not shown) and a groove (not shown). Thus, after the completion of a cutting action on the first 20 and the second 30 determined score line, the wall member 10 may be removed.

The position and the shape of the first 20 and the second 30 score line are defined in a specific manner and therewith the size and the shape of the wall member 10 of the scroll wall 3.

The opposite wall member 21 of the first score line 20 remains connected to the scroll wall 3 after a cutting operation. The wall member 22 of the first determined score line 20 is part of the wall element 10 and is removed from the scroll wall 3 after the cutting operation.

After the cutting operation, a user can remove the wall member 10 to access the air treatment device that requires servicing.

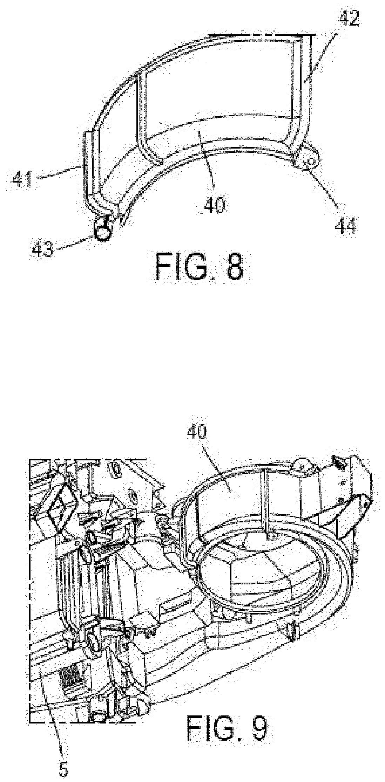

The wall member 21 of the first determined score line 20 is specifically designed to allow close and airtight contact with a replacement part 40 shown in Figure 8. The replacement part 40 must be fixed to the scroll wall 3 after servicing the related air treatment device.

The use of the present invention for allowing access to the heater core is described below with reference to Figures 8 and 9.

In a first step, the blower 2 is removed from the HVAC unit 1, as shown in Figure 1.

Once the blower 2 is removed, the scroll wall 3 is accessible to allow a cutting operation using the first 20 and the second 30 determined score line. In order to use the first determined score line 20, a cutting device is entered in the groove 23 to cut the scroll wall 3 from the top to the bottom of said groove 23. In a similar manner, the second determined score line 30 is used to cut the scroll wall 3 from the top to the bottom of the related groove.

After processing both cutting operations, the user can remove the wall part 10 from the scroll wall 3, as shown in Figure 6.

Thus, the scroll wall 3 no longer hinders the removal of the heater core 6 from the right hand side. As shown in Figure 7, the heater core 6 is removed by sliding the heater core 6 out of the wall element 5.

In a further step, the heater core 6 can be serviced or replaced. After this step, the heater core 6 is placed inside the wall element 5. The wall element 10 cannot be reused to close the gap in the scroll wall 3. Instead, a replacement part 40, as shown in Figure 8, is used to close said gap in the scroll wall 3.

The replacement part 40 comprises a first end 41 and a second end 42 designed to allow airtight fixing of the replacement part 40 against the remaining part of the scroll wall 3. The first end 41 is adapted to allow tight fixing against with the wall member 21 of the first determined score line 20. In a similar manner, the second end 42 is adapted to allow tight fixing against the wall member of the second determined score line 30.

The connection between the first end 41 of the replacement part 40 and the wall member 21 may comprise a tongue-groove connection. This means that a protruding part of a first end 41 and the wall member 21 is received in a notch of the remaining part of the scroll wall 3. A similar arrangement may be available for the opposite end 42 of the replacement part 40.

The replacement part 40 may be fixed against the scroll wall 3 by means of any suitable fixing means. The remaining part of the first 20 and second 30 determined score line may comprise a seat for receiving a fixing means, such as a screw or a clip.

In the example of Figures 8 and 9, the replacement part 40 is fixed to the scroll wall 3 by means of apertures 43 and 44 which are fixed by means of the fixing means used for fixing the blower 2 in the HVAC unit.

## Claims

1. Heating Ventilation and Air Conditioning (HVAC) unit (1) for conditioning a flow of air, with at least one air treatment device (6) and a housing (3, 5) for receiving said at least one air treatment device (6), the housing (3, 5) having a housing wall (3) with a defined removable wall part (10) located between a first (20) and a second (30) determined score line, the first (20) and the second (30) determined score line providing a guide for cutting the housing wall (3) to allow removal of the removable wall part (10), wherein the at least one air treatment device (6) and the removable wall part (10) are mutually positioned to allow access to the at least one air treatment device (6) from the exterior of the HVAC unit (1) after removal of the removable wall part (10), **characterized in that** said HVAC unit (1) comprises a blower unit (2) surrounded by a scroll wall (3) and a heater core (6) surrounded by a wall element (5), said at least one treatment device being the heater core (6), and said removable wall part (10) being a part of the scroll wall (3).

2. HVAC unit (1) according to claim 1, wherein the heater core (6) and the removable part (10) of the scroll wall (3) are mutually positioned to allow removal of the heater core (6) from the HVAC unit (1) after removal of the removable wall part (10).

3. HVAC unit (1) according to claim 1 or 2, wherein the first (20) and the second (30) determined score line comprise opposing walls (21, 22) forming a groove (23) for guiding a cutting device during the cutting of the housing wall (3).

4. HVAC unit (1) according to any of the preceding claims, wherein the first (20) and the second (30) determined score line comprise an exterior section adapted to remain fixed to the housing wall (3) after removal of the removable wall part (10) and an opposing inner section adapted to be part of the removable wall part (10).

5. HVAC unit (1) according to claim 4, wherein the exterior section of the first (20) and the second (30) determined score line comprise an edge to accommodate a seal member of a replacement part (40) that is adapted to be fixed between the exterior section of the first (20) and the second (30) determined score line.

6. HVAC unit (1) according to claim 4, wherein the exterior section of the first (20) and the second (30) determined score line comprise a seat for fixing a fixing means (43, 44) of a replacement part (40) adapted to be fixed between the exterior section of the first (20) and the second (30) determined score line.

7. HVAC Housing for receiving a heater core (6) of an HVAC unit (1) according to any of claims 1 to 6, wherein;
- the housing comprises a scroll wall (3) configured to surround a blower unit (2) and a wall element (5) configured to surround the heater core (6),
- wherein a part of the scroll wall (3) defines a removable wall part (10) between a first (20) and a second (30) determined score line, the first (20) and the second (30) determined score line providing a guide for cutting the scroll wall (3) to allow removal of the removable scroll wall part (10), said removable scroll wall part (10) being positioned to allow access to the heater core (6) from the exterior of the HVAC unit (1) after removal.

## Patentansprüche

1. Heizungs-, Lüftungs- und Klimatisierungs-Anlage (1) zur Klimatisierung eines Luftstroms mit mindestens einer Luftaufbereitungsvorrichtung (6) und einem Gehäuse (3, 5) zur Aufnahme der mindestens einen Luftaufbereitungsvorrichtung (6), wobei das Gehäuse (3, 5) eine Gehäusewand (3) mit einem definierten, abnehmbaren Wandteil (10) aufweist, der sich zwischen einer ersten (20) und einer zweiten (30) festgelegten Falzlinie befindet, wobei die erste (20) und zweite (30) festgelegte Falzlinie eine Führung zum Schneiden der Gehäusewand (3) vorsehen, um das Abnehmen des abnehmbaren Wandteils (10) zuzulassen, wobei die mindestens eine Luftaufbereitungsvorrichtung (6) und der abnehmbare Wandteil (10) zueinander angeordnet sind, um vom Äußeren der HLK-Anlage (1) nach dem Abnehmen des abnehmbaren Wandteils (10) Zugriff auf die mindestens eine Luftaufbereitungsvorrichtung (6) zuzulassen, **dadurch gekennzeichnet, dass** die HLK-Anlage (1) eine Gebläseanlage (2), die von einer Spiralwand (3) umgeben ist, und einen Heizwärmetauscher (6), der von einem Wandelement (5) umgeben ist, umfasst, wobei die mindestens eine Behandlungsvorrichtung der Heizwärmetauscher (6) ist und der abnehmbare Wandteil (10) ein Teil der Spiralwand (3) ist.

2. Heizungs-, Lüftungs- und Klimatisierungs-Anlage (1) nach Anspruch 1, wobei der Heizwärmetauscher (6) und der abnehmbare Teil (10) der Spiralwand (3) zueinander angeordnet sind, um das Abnehmen des Heizwärmetauschers (6) von der HLK-Anlage (1) nach dem Abnehmen des abnehmbaren Wandteils (10) zuzulassen.

3. Heizungs-, Lüftungs- und Klimatisierungs-Anlage (1) nach Anspruch 1 oder 2, wobei die erste (20) und zweite (30) festgelegte Falzlinie entgegengesetzte Wände (21, 22) umfassen, die eine Nut (23) zum Führen einer Schneidvorrichtung beim Schneiden der Gehäusewand (3) ausbilden.

4. Heizungs-, Lüftungs- und Klimatisierungs-Anlage (1) nach einem der vorstehenden Ansprüche, wobei die erste (20) und zweite (30) festgelegte Falzlinie einen äußeren Abschnitt, der dazu eingerichtet ist, nach dem Abnehmen des abnehmbaren Wandteils (10) an der Gehäusewand (3) befestigt zu bleiben, und einen entgegengesetzten inneren Abschnitt, der dazu eingerichtet ist, Teil des abnehmbaren Wandteils (10) zu sein, umfassen.

5. Heizungs-, Lüftungs- und Klimatisierungs-Anlage (1) nach Anspruch 4, wobei der äußere Abschnitt der ersten (20) und zweiten (30) festgelegten Falzlinie eine Kante umfasst, um ein Dichtungselement eines Austauschteils (40) aufzunehmen, das dazu eingerichtet ist, zwischen dem äußeren Abschnitt der ersten (20) und zweiten (30) festgelegten Falzlinie befestigt zu sein.

6. Heizungs-, Lüftungs- und Klimatisierungs-Anlage (1) nach Anspruch 4, wobei der äußere Abschnitt der ersten (20) und zweiten (30) festgelegten Falzlinie einen Sitz zum Befestigen einer Befestigungseinrichtung (43, 44) eines Austauschteils (40) umfasst, der dazu eingerichtet ist, zwischen dem äußeren Abschnitt der ersten (20) und zweiten (30) festgelegten Falzlinie befestigt zu sein.

7. Heizungs-, Lüftungs- und Klimatisierungs-Anlagengehäuse zur Aufnahme eines Heizwärmetauschers (6) einer HLK-Anlage (1) nach einem der Ansprüche 1 bis 6, wobei: das Gehäuse eine Spiralwand (3), die dazu ausgelegt ist, eine Gebläseanlage (2) zu umgeben, und ein Wandelement (5), das dazu ausgelegt ist, den Heizwärmetauscher (6) zu umgeben, umfasst,
wobei ein Teil der Spiralwand (3) einen abnehmbaren Wandteil (10) zwischen einer ersten (20) und zweiten (30) festgelegten Falzlinie definiert, wobei die erste (20) und zweite (30) festgelegte Falzlinie eine Führung zum Schneiden der Spiralwand (3) vorsehen, um das Abnehmen des abnehmbaren Rollenwandteils (10) zuzulassen, wobei der abnehmbare Rollenwandteil (10) positioniert ist, um vom Äußeren der HLK-Anlage (1) nach dem Abnehmen Zugriff auf den Heizwärmetauscher (6) zuzulassen.

## Revendications

1. Unité de chauffage, de ventilation et de climatisation (HVAC) (1) pour conditionner un flux d'air, avec au moins un dispositif de traitement d'air (6) et un boîtier (3, 5) pour recevoir ledit ou lesdits dispositifs de traitement d'air (6), le boîtier (3, 5) ayant une paroi de boîtier (3) ayant une partie de paroi amovible définie (10) située entre une première (20) et une seconde (30) ligne de repère déterminée, la première (20) et la seconde (30) ligne de repère déterminée fournissant un guide pour découper la paroi de boîtier (3) pour permettre le retrait de la partie de paroi amovible (10), dans laquelle le ou les dispositifs de traitement d'air (6) et la partie de paroi amovible (10) sont mutuellement positionnés pour permettre un accès au ou aux dispositifs de traitement d'air (6) depuis l'extérieur de l'unité HVAC (1) après le retrait de la partie de paroi amovible (10), **caractérisée en ce que** ladite unité HVAC (1) comprend une unité de ventilateur (2) entourée par une paroi de volute (3) et un radiateur de chauffage (6) entouré par un élément de paroi (5), ledit ou lesdits dispositifs de traitement étant le radiateur de chauffage (6) et ladite partie de paroi amovible (10) étant une partie de la paroi de volute (3).

2. Unité HVAC (1) selon la revendication 1, dans laquelle le radiateur de chauffage (6) et la partie amovible (10) de la paroi de volute (3) sont mutuellement positionnés pour permettre un retrait du radiateur de chauffage (6) de l'unité HVAC (1) après le retrait de la partie de paroi amovible (10) .

3. Unité HVAC (1) selon la revendication 1 ou 2, dans laquelle la première (20) et la seconde (30) ligne de repère déterminée comprennent des parois opposées (21, 22) formant une rainure (23) pour guider un dispositif de coupe pendant la découpe de la paroi de boîtier (3).

4. Unité HVAC (1) selon l'une quelconque des revendications précédentes, dans laquelle la première (20) et la seconde (30) ligne de repère déterminée comprennent une section extérieure conçue pour rester fixée à la paroi de boîtier (3) après le retrait de la partie de paroi amovible (10) et une section interne opposée conçue pour faire partie de la partie de paroi amovible (10).

5. Unité HVAC (1) selon la revendication 4, dans laquelle la section extérieure de la première (20) et de la seconde (30) ligne de repère déterminée comprend un bord pour recevoir un élément d'étanchéité d'une pièce de rechange (40) qui est conçue pour être fixée entre la section extérieure de la première (20) et de la seconde (30) ligne de repère déterminée.

6. Unité HVAC (1) selon la revendication 4, dans laquelle la section extérieure de la première (20) et de la seconde (30) ligne de repère déterminée comprend un siège pour fixer un moyen de fixation (43, 44) d'une pièce de rechange (40) conçue pour être fixée entre la section extérieure de la première (20) et de la seconde (30) ligne de repère déterminée.

7. Boîtier pour unité HVAC pour recevoir un radiateur de chauffage (6) d'une unité HVAC (1) selon l'une quelconque des revendications 1 à 6, dans lequel :
- le boîtier comprend une paroi de volute (3) configurée pour entourer une unité de ventilateur (2) et un élément de paroi (5) configuré pour entourer le radiateur de chauffage (6),
- dans lequel une partie de la paroi de volute (3) définit une partie de paroi amovible (10) entre une première (20) et une seconde (30) ligne de repère déterminée, la première (20) et la seconde (30) ligne de repère déterminée fournissant un guide pour découper la paroi de volute (3) pour permettre le retrait de la partie de paroi de volute amovible (10), ladite partie de paroi de volute amovible (10) étant positionnée pour permettre un accès au radiateur de chauffage (6) depuis l'extérieur de l'unité HVAC (1) après le retrait.
